# FASCICULE DE BREVET EUROPEEN

(11) **EP 1 507 750 B1**
(45) Date de publication et mention de la délivrance du brevet: **28.04.2021**
(21) Numéro de dépôt: 03724742.6
(22) Date de dépôt: 27.05.2003
(51) Int. Cl.: C01G 23/00, C01G 25/00, B82Y 30/00, C04B 35/462, C04B 35/622, C04B 35/626, C04B 35/628, C04B 35/634, H01M 8/1246, H01M 10/052, H01M 4/90, H01M 4/1391, H01M 4/485

(54) **PROCEDE DE PREPARATION DE POUDRES CERAMIQUES EN PRESENCE D'UNE SOURCE DE CARBONE**
VERFAHREN ZUR HERSTELLUNG VON KERAMISCHEN PULVERN IN ANWESENHEIT VON EINER KOHLENSTOFQUELLE
METHOD FOR PREPARING CERAMIC POWDERS IN THE PRESENCE OF A CARBON SOURCE

(30) Priorité: 30.05.2002 CA 2389555
(43) Date de publication de la demande: 23.02.2005
(73) Titulaire: HYDRO-QUEBEC, Montréal, Québec H2Z 1A4 (CA)
(72) Inventeur: ZAGHIB, Karim, Longueuil, Québec J4M 2M7 (CA); GUERFI, Abdelbast, Brossard, Québec J4X 1W2 (CA); ARMAND, Michel, Montréal, Québec H3T 1N2 (CA); CHAREST, Patrick, Sainte-Julie, Québec J3E 1P2 (CA)
(74) Mandataire: Ipsilon
(86) Numéro de dépôt international: PCT/CA2003/000795
(87) Numéro de publication internationale: WO 2003/101909

(56) Documents cités:
- EP-A- 0 157 366
- EP-A- 0 313 412
- EP-A- 0 448 302
- EP-A- 1 049 182
- WO-A-01/53198
- WO-A-02/27824
- US-A- 4 741 253
- US-A- 5 766 796
- US-A- 6 153 336
- US-B1- 6 207 311
- US-B1- 6 387 568
- PATENT ABSTRACTS OF JAPAN vol. 014, no. 456 (C-0765), 2 octobre 1990 (1990-10-02) & JP 02 180754 A (HITACHI METALS LTD), 13 juillet 1990 (1990-07-13)
- DR J STEIN AND AL: "Mechanofusion for high performance particles", PROCESS ENGINEERING, LONDON, GB, vol. 79, no. 4, 1 January 2002 (2002-01-01), pages E11-E15, XP002315531,
- 2 Max: "POWDER AND PARTICLE PROCESSING", hokosawa micron, 1 January 2020 (2020-01-01), pages 1-10, XP055664827, Retrieved from the Internet: URL:https://hosokawamicron.co.jp/en/downlo ad/confirm [retrieved on 2020-02-04]

## Description

### DOMAINE DE L'INVENTION

La présente invention est relative à un procédé de préparation de poudres céramiques en présence de carbone. Ce procédé est particulièrement avantageux pour la préparation de poudres céramiques dont la taille moyenne est de l'ordre du nanomètre et comme étape préliminaire à la préparation de céramiques.

Des poudres de céramique et les céramiques peuvent être obtenues par ces procédés, notamment des céramiques conductrices comportant du carbone résiduaire et peuvent être utilisées dans l'industrie.

### ÉTAT DE LA TECHNIQUE

On appelle généralement céramiques tout produit fabriqué par traitement thermique notamment à partir d'argiles, de sables, de feldspaths et/ou de craies.

On désigne dans le cadre de la présente invention, par poudre céramique tout mélange de particules susceptible de résulter après traitement thermique dans une céramique.

Comme précisé notamment dans le Tome 3 du Grand Larousse Universel publié par Actualia, les céramiques, au pluriel, sont tous les métaux manufacturés ou tous les produits qui sont chimiquement inorganiques, exception faite des métaux et de leurs alliages, et qui sont obtenus, généralement, par des traitements à haute température.

La littérature répertorie différents type de céramiques, il s'agit notamment des céramiques traditionnelles telles que les verres, les liants hydrauliques (ciment, chaux) et les émaux sur tôle. Les autres céramiques sont habituellement classées en deux catégories, d'après la nature de la pâte cuite utilisée pour leur préparation.

Il s'agit tout d'abord des produits de type poreux caractérisés par une cassure terreuse et par une pâte perméable, ainsi les poteries à pâte perméable plus ou moins colorée en rouge par l'oxyde de fer telles que les terres cuites, les poteries vernissées, la faïence stannifère, les produits réfractaires résistant aux hautes températures, les poteries à pâte perméable blanche et fine telles que les faïences fines.

Il s'agit également des produits céramiques imperméables tels que les grès cérames, les porcelaines dont la pâte est dure et les porcelaines sanitaires.

Le Tome 3 du Grand Larousse Universel édité par Actualia mentionne également les nouvelles céramiques qui correspondent à de très nombreuses catégories dont les oxydes, les carbures, les nitrures, les borures et les siliciures. Ces produits principalement obtenus à partir de poudres sont communément appelés produits frittés. Cette catégorie couvre les composés ayant une structure physico-chimique de type binaire, alors que les céramiques traditionnelles silicatées correspondent, elles, à un mélange d'oxydes en proportions variables.

Les céramiques de type techniques sont utilisées dans les secteurs de haute technologie comme l'industrie nucléaire, l'aéronautique, l'informatique et l'électronique.

Les récents progrès de la science des matériaux ont élargi le champ d'application des céramiques à de nouvelles applications basées sur les propriétés électriques, magnétiques, optiques, piézoélectriques, mécaniques et nucléaires et qui exploitent la nature des matières premières utilisées, qu'il s'agisse d'oxydes ou de non oxydes tels que des carbures ou des nitrures, produits de l'industrie chimique.

Anciennement, l'argile et le silicate d'alumine hydratée (SiO₂ ALO₃ H₂O) constituaient principalement la matière première utilisée pour la fabrication des céramiques décoratives, de carreaux, de sanitaires et de quelques réfractaires.

Depuis, l'emploi d'autres matières premières naturelles ou synthétiques de type alumine frittée, silice, composés silico-alumineux magnésiens (cordiérite, mullite, stéatite) a été à l'origine du développement des céramiques dites techniques.

Ainsi l'utilisation des alcalino-terreux, du carbone ainsi que de l'azote a permis de développer des phases nouvelles telles que les oxynitrures, les sialons, et les carbure utilisés dans les céramiques de pointe.

La notion de matière première aussi appelée mélange de précurseurs s'est donc élargie avec le temps, il s'agit en fait de matériaux ayant subi une préparation extrêmement complexe.
- les poudres (oxydes, nitrures, carbures...): grâce à de nouveaux procédés d'élaboration, on obtient des poudres, de granulométrie contrôlée et d'une grande pureté chimique, le produit final s'obtient alors par une mise en forme puis par traitement thermique;
- les fibres courtes monocristallines: des fibres courtes de l'ordre de quelques fractions de millimètres sont dispersées dans un matrice qui peut être organique, métallique ou céramique, les "wiskers" de carbure de silicium servent à la réalisation de matériaux composites à forte résistance mécanique;
- les précurseurs organométalliques: par thermolyse, certains molécules organiques complexes donnent naissance à des carbures ou à des nitrures (SiC, Si₃N₄...) utilisés notamment dans l'industrie réfractaire pour développer un produit de haute technicité, enfin l'industrie chimique a fourni aux céramistes des molécules jouant un rôle de liants ou de plastifiants (alcool polyvinylique, carboxyméthylecellulose, alginate, cire...) permettant l'accès à de nouveaux procédés de façonnage, comme le pressage à sec, l'injection thermoplastique, et le coulage en bande.

Les céramiques récemment développées sont souvent qualifiées de céramiques fines ou de céramiques techniques. Cette qualification s'applique car la matière première est une poudre minérale mise en forme pour produire l'objet, et le traitement thermique est nécessaire pour lui donner les caractéristiques recherchées.

Les céramiques sont des matériaux poly-cristallins, polyphasés dont les propriétés finales du produit sont conditionnées pour les propriétés intrinsèques des constituants. Ainsi la combinaison de grains conducteurs et de joints isolants est essentielle pour les propriétés associées à plusieurs composants céramiques utilisables dans le domaine de l'électronique.

La mise au point de microstructures particulières notamment celles incluant du zircone et un renfort par fibres, confère aux céramiques une contrainte à la rupture du niveau de celle des métaux, tout en gardant une tenue en température nettement supérieure.

Les céramiques légères se sont révélées représenter des matériaux idéaux pour l'aéronautique. Par ailleurs la mise au point de céramiques ayant une porosité déterminée permet la fabrication de membranes de grandes utilité dans les techniques environnementales et dans l'industrie agroalimentaire. L'emploi de poudres nanométriques et de matériaux à gradients de composition permet quant à elle la préparation de nouveaux produits céramiques.

Parmi les procédés récemment développés pour l'élaboration de nouvelles céramiques on peut citer, à titre d'exemple, Je coulage en bande, le pressage isostatique et Je moulage par injection ou par extrusion.

De plus, la plasticité nécessaire pour l'opération de mise en forme des céramiques est assurée par l'emploi de liants ou de plastifiants, de produits organiques comme les cires, la cellulose ou les composés acryliques, dans les procédés de préparation des céramiques.

Récemment des techniques de coagulation (sol- gel) d'une grande facilité de mise en œuvre ont été développées.

Il est connu de préparer des particules phosphatiques ou des particules d'oxyde aptes à former des céramiques qui présentent une conductivité électronique. Par exemple WO02/27824 décrit la synthèse d'une poudre de LiFePO₄ enrobée de carbone. La synthèse est effectuée à partir de précurseurs de LiFePO₄ et d'une source de carbone, en atmosphère réductrice, pour conserver du carbone à la surface des particules. WO01/53198 décrit un procédé analogue pour produire des poudres phosphatiques et des poudres oxydées enrobées de carbone. US-B-6 387 568 décrit un procédé similaire pour produire VPO₄. Dans tous ces documents antérieurs, la synthèse est effectuée en présence d'une quantité de source de carbone telle et/ou dans un environnement tel que les particules de poudre obtenue sont enrobées de carbone.

EP0157366 décrit un procédé de production d'une poudre de zircone. Le procédé comprend un chauffage à très haute température (1300 à 2000°C), sous une atmosphère non-oxydante, particulièrement une atmosphère d'argon d'un mélange broyé d'une poudre à base de zirconium et d'une poudre d'un matériau comprenant du carbone.

Enfin, les céramiques présentent l'avantage de pouvoir être préparées sous forme de couches minces ou épaisses, et de n'utiliser ainsi que des quantités limitées de matière première.

Ainsi utilisées comme revêtement, les céramiques jouent un rôle de protection, contre notamment l'usure, la corrosion et/ou la chaleur. Elles sont également susceptibles de s'intégrer avec leurs spécificités de capteurs électrochimiques, de mémoires ferroélectriques, et/ou d' électrodes transparentes dans des systèmes plus complexes, comme ceux que l'on rencontre dans l'électronique et dans la micromécanique.

Les céramiques techniques sont utilisées dans tous les grands secteurs de l'activité industrielle comme cela est mentionné dans la publication Les Applications, extraite du document Les Céramiques", édité par Le Centre Européen de la Céramique, Limoges, France.

Malgré un niveau élevé de performances associé aux céramiques le développement de ces dernières est encore relativement limité, cela provient du fait que les procédés de fabrication des céramiques généralement utilisés sont longs et complexes. Un autre des nombreux facteurs limitatifs au développement des céramiques réside dans le coût énergétique élevé qui associé avec leur préparation. Il existait donc un besoin pour la mise au point de nouveaux procédés de préparation des céramiques d'une productivité et d'une rentabilité améliorées.

### DANS LES DESSINS

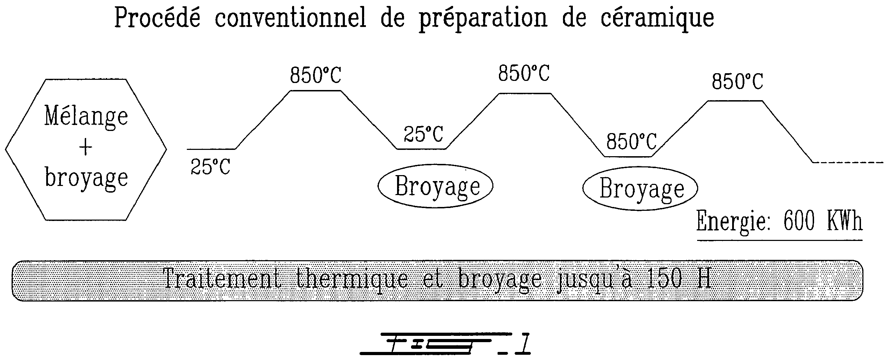

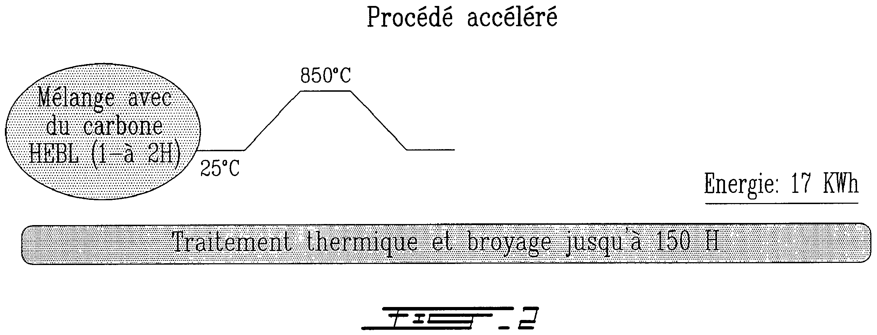

**La** **Figure 1****:** illustre un procédé conventionnel de préparation de céramiques, ce procédé met en œuvre une succession de traitement thermiques et de broyage des particules retenues pour former la poudre céramique.
**La** **Figure 2****:** illustre un mode de réalisation du procédé selon l'invention permettant la préparation accélérée de céramique dans lequel la poudre est soumise à une nombre limité de séquences.

### RÉSUMÉ DE L'INVENTION

La présente invention est relative à un procédé de préparation d'une poudre céramique tel que défini dans la revendication 1. Ce procédé accéléré permet d'obtenir, à un coût énergétique réduit, des poudres céramiques puis des céramiques.

### DESCRIPTION DE L'INVENTION

Un objet de la présente invention réside dans un procédé de préparation d'une poudre céramique à partir d'un mélange de précurseurs, en présence d'au moins une source de carbone qui peut être sous forme liquide, solide, gazeuse ou sous forme hétérogène. La source de carbone utilisée est par exemple sous la forme de particules de graphite en suspension dans un hydrocarbure ou dans un résidu de raffinerie.

Le procédé est avantageusement réalisé en présence d'un solvant ayant pour fonction de disperser les précurseurs du mélange de départ qui va être soumis à homogénéisation et plus particulièrement d'éviter la formation d'agglomérats de précurseurs. Ce solvant est de préférence de type organique et il est préférentiellement choisi dans le groupe constitué par l'eau, les solvants organiques et les solvants inorganiques. Parmi les solvants organiques on retient de préférence les alcools, les esters et les cétones.

Selon un mode avantageux de réalisation de l'invention, la source de carbone utilisée pour la mise en œuvre du procédé est sous forme liquide et elle est constituée par:
- un ou plusieurs hydrocarbures, de préférence par un mélange d'hydrocarbures liquides à température ambiante tel que des résidus de raffinerie, de préférence du coke de pétrole ou du coke de braie; ou
- un ou plusieurs polymères ayant un poids moléculaire supérieur à 50.000, de préférence par un mélange de ou à base de polymères oxygénés tel qu'un mélange d'oxyde de propylène dans l'acétonitrile.

Selon un autre mode avantageux de réalisation, la source de carbone sous forme solide est choisie dans le groupe constitué par les particules de carbone synthétique ou naturel, tel que les particules de noir de Ketjen, de noir de Shawinigam ou d'un mélange de ces derniers.

De façon préférée, la source solide de carbone utilisée présente une pureté supérieure à 50 % et les impuretés lorsqu'elles sont présentes sont préférentiellement choisies dans le groupe constitué par le soufre, l'azote, et l'oxygène.

Lorsque la source de carbone est sous forme gazeuse elle est choisie dans le groupe constitué par les alcanes, les alcènes, les alcynes ou un mélange de ces derniers. Comme source gazeuse on utilise préférentiellement un gaz tel que CH₄, C₂H₆, C₂H₂ ou un mélange de ces derniers.

Le procédé de préparation d'une poudre céramique à partir d'un mélange de précurseurs de ladite poudre et en présence d'au moins une source de carbone selon l'invention comprend au moins les étapes mentionnées dans la revendication 1.

L'élimination du solvant du mélange intime obtenu dans l'étape a) se fait à une température comprise de préférence entre 40 et 150 degrés Celsius, plus préférentiellement encore à une température comprise entre 60 et 120 degrés Celsius.

L'introduction de la source de carbone et du solvant se fait préférentiellement au début de l'étape a) mais peut être également réalisée au cours de l'étape a).

La réalisation du procédé sous une atmosphère réductrice formée de préférence par de l'azote, de l'argon ou un mélange de ces derniers permet l'obtention de particules de poudre céramique enrobées de carbone.

De façon avantageuse, la source solide de carbone est constituée par des particules de carbone ayant une taille qui varie entre 10 et 900 nanomètres et présentant une surface spécifique mesurée selon la méthode BET qui est supérieure à 50 m²/g.

Selon un mode particulièrement intéressant de mise en œuvre du procédé, le mélange de particules susceptible de résulter en céramique par traitement thermique est un mélange de particules de ZrO₂ et de particules de Y₂O₃. Ce mélange est constitué de préférence de x pour cent en poids de particules de ZrO₂ et de (100-x) pour cent en poids de particules de Y₂O₃, avec x variant de 1 à 99. De façon encore plus avantageuse, x est voisin de 50.

Selon un autre mode particulier de réalisation de la présente invention, le mélange de particules susceptible de résulter en céramique par traitement thermique et qui est utilisé pour la mise en œuvre du procédé, est constituée de particules de Li₂CO₃ et de particules de TiO₂. Ce mélange est constitué de x pour cent en poids de particules de Li₂CO₃ et de (100-x) pour cent en poids de particules de TiO₂., avec x variant de 1 à 99. De façon encore plus avantageuse, x est voisin de 50.

Selon un autre mode particulier, le mélange de particules susceptible de résulter en céramique par traitement thermique est constitué de particules de Li₂CO₃ et de particules de TiO₂. Ce mélange est constitué de x pour cent en poids de particules de Li₂CO₃ et de (100-x) pour cent en poids de particules de TiO₂, avec x variant de préférence entre 1 et 92. La source de carbone est alors préférentiellement constituée par un polymère à base de polyoxyde d'éthylène. Ce polyoxyde d'éthylène ayant de préférence un poids moléculaire moyen de 54.000 et il est avantageusement dissous avant la mise en œuvre de l'étape d'homogénéisation dans un solvant aqueux ou organique tel que l'acétonitrile.

Pour la mise en œuvre du procédé, les particules du mélange susceptible de résulter en une céramique présentent avantageusement une taille comprise entre 1 nanomètre et 10 micromètres. Cette taille est de façon encore plus avantageuse comprise entre 20 et 800 nanomètres.

Des résultats particulièrement avantageux sont obtenus lors de la mise en œuvre du procédé de préparation avec des particules de ZrO₂, Y₂O₃, TiO₂ ou Li₂TiO₃ dont la taille varie entre 1 et 10 microns.

Parmi les poudres de carbone, on retiendra particulièrement celles qui présentent une répartition granulométrique caractérisée par une D50 comprise entre 10 nanomètres et 10 micromètres, plus particulièrement encore celles ayant une D50 comprise entre 100 nanomètres et 2 micromètres.

Lorsque la poudre de la source de carbone est constituée par un polymère ou par un hydrocarbure sous forme de poudre, on retiendra avantageusement les poudres correspondantes qui présentent une D50 de 10 à 500 nanomètres, et on préférera encore celles dont la D50 varie de 100 à 200 nanomètres.

En ce qui concerne les particules de la source susceptible de résulter en une céramique par traitement thermique, on privilégiera celles présentant une répartition granulométrique caractérisée par une D50 comprise entre 10 nanomètres et 10 micromètres. Celles présentant une D50 comprise entre 100 nanomètres et 2 micromètres présentent un intérêt particulier.

D'une façon générale des résultats intéressants sont obtenus lorsque les diverses particules utilisées dans le procédé ont des caractéristiques granulométriques sensiblement similaires, et plus particulièrement caractérisées par des D50 inférieures ou égales à 1 micromètre. L'homogénéisation se fait dans l'étape a) par voie solvant et on utilise un dispositif de mécano-fusion de la Compagnie HOSOKAWA, Japon . La vitesse d'homogénéisation est, en particulier, pour les mélangeurs de type Aglomaster de préférence comprise entre 1500 et 3000 tours/minutes.

La durée de l'étape a) est généralement comprise entre 1 et 3 heures. Elle est plus préférentiellement encore d'environ 2 heures.

La durée de l'étape c) est, quant à elle, de 2 à 24 heures. Elle est plus préférentiellement encore d'environ 3 heures.

Selon un mode avantageux de réalisation de 'invention les étapes sont réalisées sous atmosphère inerte, afin de garder le carbone dans le produit final, de préférence sous azote ou sous argon, ou sous un mélange de ces derniers. Sinon, le carbone est oxydé et éliminé par évaporation sous forme de gaz carbonique.

Afin d'éliminer toute trace de carbone résiduaire dans la poudre céramique obtenue en fin de procédé, on réalise alors au moins une étape du procédé en présence d'une source d'oxygène telle que l'air ou de l'oxygène pur. Cette précaution est nécessaire en particulier dans le cas où la présence de carbone résiduaire pourrait nuire à la qualité de la céramique que l'on souhaite préparer à partir de cette poudre.

La source de carbone peut être en partie sous forme liquide et/ou gazeuse.

Selon un mode avantageux de réalisation de l'étape b) l'élimination du solvant est réalisée à une température comprise entre 200 et 500 degré Celsius, et plus préférentiellement encore à une température d'environ 400 Celsius. La durée de ce traitement thermique est quant à elle avantageusement comprise entre 12 et 24 heures, et de préférence d'environ 20 heures.

Selon un mode préférentiel de réalisation de la présente invention, l'étape de carbonisation est réalisée dans le réacteur ayant servi à réaliser l'homogénéisation du mélange susceptible de résulter en céramique par traitement thermique.

Le procédé de préparation selon l'invention permet notamment d'obtenir une poudre céramique dont les particules présentent une granulométrie comprise entre 10 nanomètres et 1 micron. La taille des particules de la poudre céramique obtenue est avantageusement comprise entre 50 et 500 nm.

Dans l'étape a) d'homogénéisation, la température est réglée de façon avantageuse entre 20 et 40° Celsius, plus préférentiellement encore cette température est d'environ 25° C.

Dans l'étape c) de carbonisation, la température est avantageusement réglée entre 700 et 1.200°Celcius, plus préférentiellement encore cette température est d'environ 1.100 °C.

De façon avantageuse, la quantité de la source de carbone utilisée dans le procédé représente de 2 à 10% en poids, de préférence environ 6% en poids du mélange de particules susceptible de résulter en une céramique par traitement thermique.

Préférentiellement, la source de carbone est un polymère et la quantité de polymère utilisée représente de 5 à 30 % en poids, de préférence environ 20 % en poids, plus préférentiellement encore environ 10 % en poids du mélange de particules susceptible de résulter en une céramique par traitement thermique.

Dans le mode particulier dans lequel un mélange de poudre de Y₂O₃ et de ZrO₂ est utilisé pour la préparation de la poudre céramique, la quantité de Y₂O₃ dans le mélange de particules soumis à broyage varie entre 5 et 15 % et celui de la quantité de ZrO₂ varie de 5 à 15 % en poids.

Le procédé de préparation selon la présente invention permet avantageusement d'obtenir une poudre céramique présentant à la fin de l'étape b) ou à la fin de l'étape c) une structure de type nano, plus préférentiellement encore la taille des particules céramiques ainsi obtenues est comprise entre 10 et 900 nanomètres.

Des poudres céramiques sont susceptibles d'être obtenues par l'un des procédés objet de la présente invention. Ces poudres se caractérisant notamment par une répartition granulométrique homogène et/ou par une teneur en carbone résiduel située entre 0,05 et 10 %.

Une céramique peut être préparée selon un procédé incorporant les étapes de préparation d'une poudre céramique, étapes définies dans le cadre de l'objet de l'invention ainsi qu'une étape finale dans laquelle la poudre de céramique obtenue est soumise, selon un mode habituel de transformation des poudres céramiques en céramique, à au moins un traitement thermique à une température supérieure à 800° Celcius, pendant une durée qui est de préférence comprise entre 3 et 24 heures.

Une céramique est ainsi susceptible d'être obtenue par ce procédé.

La poudre ou la céramique peut être utilisée dans le domaine des piles à combustible ou dans le domaine de l'automobile, plus particulièrement encore dans la préparation de têtes de piston. Ces poudres et céramiques sont également avantageusement utilisées pour la préparation d'anodes ou d'électrolytes céramiques et celles dépourvues de carbone résiduaire sont avantageusement utilisées dans la fabrication d'isolants électriques.

### DESCRIPTION DE MODES PRÉFÉRENTIELS DE RÉALISATION DE L'INVENTION

Le procédé de préparation de poudre céramique selon la présente invention est avantageusement réalisé en deux étapes comme illustré dans la Figure 2.

La première étape de préparation de la poudre céramique consiste par exemple dans la préparation en présence de carbone d'une poudre à partir d'un mélange de préférence de ZrO₂ et de Y₂O₃, par broyage mécanique à haute énergie pendant de préférence de 1 à 2 heures, jusqu'à ce que le mélange devienne intime.

La deuxième étape de préparation de la céramique consiste dans le chauffage de la poudre obtenue dans la première étape, de préférence à une température de 850°C, préférentiellement pendant 3 heures. La poudre céramique ainsi obtenue est une poudre nanométrique. La formation de la céramique est mise en évidence par diffraction aux rayons X.

Ce procédé est simple à mettre en œuvre du fait qu'il ne comporte que deux étapes, de plus ces étapes sont courtes et ne nécessitent qu'un faible apport énergétique. Enfin, autre avantage, la forme nano est obtenue après seulement 5 heures.

De plus l'énergie nécessaire pour la fabrication de la poudre céramique est négligeable, elle est d'environ 17 KWh, comme illustré sur la Figure 2 jointe.

Le procédé de préparation de céramique selon la présente invention inclus une étape de formation de la céramique au cours de laquelle la poudre céramique obtenue est soumise à un traitement thermique à une température supérieure à 800 °C

### EXEMPLES

Les exemples suivants sont donnés à titre purement illustratif et ne sauraient être interprétés comme constituant une quelconque limitation de l'invention.

### Procédé conventionnel de préparation de céramique

La Figure 1 jointe illustre un de ces procédés de fabrication de céramique en plusieurs étapes de broyage et de traitement thermique. La durée d'un tel procédé est d'environ 150 heures, l'énergie mise en œuvre pour la préparation d'environ 1 kg de céramique est de l'ordre de 600 kWh, ce qui génère des coûts de production non négligeables

### Exemple 1 - Préparation à sec d'une poudre céramique de particules de LiTi₂O₄ enrobées de carbone

### Étape préliminaire de préparation d'une poudre de Li₂TiO₃

Cette étape consiste à mélanger 20 grammes d'une poudre de TiO₂ d'une taille de particules de 20 nanomètres, de structure anatase (de la Société Kronoss, intallée à Varennes - Canada) avec 18.5g d'une poudre de Li₂CO₃ d'une taille de particules de 500 nanomètres (commercialisée par la société Aldrich, Canada).

Après une homogénéisation intime réalisé par cobroyage pendant 1 heure, une poudre à fine granulométrie est obtenue. Ce cobroyage se fait par chauffage en deux étapes successives, à 400 °C puis à 750 °C, respectivement pendant 1 et 10 heures. Un produit (A) de Li₂TiO₃ de structure stoechiométrique est alors obtenu.

### Préparation de LiTi₂O₄

Dans cette deuxième étape un mélange (B) constitué de 10 grammes du produit (A) de formule Li₂TiO₃, obtenu dans l'étape préliminaire, est mélangé avec 10.8 grammes de TiO₂, 19.4 grammes de Ti₂O₃ (Aldrich, Canada) et 2.4 grammes de carbone black de Shawinigan.

Après un broyage intime pendant 1 heure à température ambiante, une poudre à fine granulométrie est obtenue. Le mélange obtenu est réchauffé à nouveau sous argon pendant 15 heures.

Le produit final obtenu est une poudre céramique de structure de type LiTi₂O₄.

### Exemple 2 - Préparation à sec des particules de LiTi₂O₄ enrobées de carbone induit par un polymère

Cette préparation est réalisée de la même façon que dans l'exemple 1, à l'exception prêt que la source de carbone solide est remplacée par un polymère à base de POE i.e par un polyoxyde d'éthylène de poids moléculaire moyen de 900.000. Le polymère étant dissout dans un excès d'eau puis mélangé avec la composition (B) sans carbone.

Les poids des différentes poudres utilisées sont les mêmes que dans l'exemple 1 et le poids du polymère est de 25 grammes. Le mélange est séché d'abord à 120°C pendant 24 heures. Après un broyage intime pendant 1 heures, une poudre à fine granulométrie est obtenue. Le mélange obtenu est réchauffé à nouveau sous argon pendant 15 heures. Le produit final à une structure de type LiTi₂O₄.

### Exemple 3 - Préparation des céramiques

par chauffage des poudres céramiques obtenues dans les exemples 1 et 2, à une température supérieure à 750 degrés celcius et pendant plus de 15 heures, une céramique est obtenue.

Bien que la présente invention ait été décrite à l'aide de mises en œuvre spécifiques, il est entendu que plusieurs variations et modifications peuvent se greffer aux dites mises en œuvre, et la présente invention vise à couvrir de telles modifications, usages ou adaptations de la présente invention suivant en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci haut, en accord avec la portée des revendications suivantes.

## Revendications

1. Procédé de préparation d'une poudre céramique à partir d'un mélange de précurseurs de ladite poudre et en présence d'au moins une source de carbone, comprenant au moins les étapes suivantes:
a) homogénéisation par voie solvant, à l'aide d'un dispositif de mécano-fusion de la Compagnie HOSOKAWA, Japon, en présence de la source de carbone et d'un solvant, pour obtenir un mélange intime, des particules de précurseur susceptibles de résulter en une céramique par traitement thermique;
b) élimination du solvant dans le mélange intime obtenu dans l'étape a); et
c) carbonisation de la source de carbone résiduelle présente dans le mélange intime de précurseurs obtenu dans l'étape b) lorsque la source de carbone n'est pas essentiellement constituée de carbone, par traitement thermique dudit mélange intime obtenu dans l'étape b), afin d'obtenir une poudre céramique ; et
d) élimination du carbone résiduaire dans la poudre céramique en présence d'une source d'oxygène.

2. Procédé de préparation selon la revendication 1, dans lequel la source de carbone est sous forme liquide, solide, gazeuse ou sous forme hétérogène.

3. Procédé de préparation selon la revendication 2, dans lequel la source de carbone sous forme liquide est choisie dans le groupe constitué par:
- un ou plusieurs hydrocarbures; ou
- un ou plusieurs polymères ayant un poids moléculaire supérieur à 50.000.

4. Procédé de préparation selon la revendication 3, dans lequel la source liquide de carbone est constituée par un mélange d'hydrocarbures liquides à température ambiante.

5. Procédé de préparation selon la revendication 4, dans lequel le mélange d'hydrocarbures liquides à température ambiante est constitué par un résidu de raffinerie.

6. Procédé de préparation selon la revendication 5, dans lequel le résidu de raffinerie est constitué par un coke de pétrole ou par un coke de braie.

7. Procédé de préparation selon la revendication 3, dans lequel la source de carbone sous forme liquide est constituée par un mélange de ou à base de polymères oxygénés ayant un poids moléculaire supérieur à 50.000.

8. Procédé de préparation selon la revendication 7, dans lequel la source de carbone sous forme liquide est constituée par un mélange d'oxyde de propylène ayant un poids moléculaire supérieur à 50.000, dans l'acétonitrile.

9. Procédé selon la revendication 2, dans lequel la source de carbone sous forme solide est choisie dans le groupe constitué par les particules de carbone synthétique ou naturel, ou un mélange de ces derniers.

10. Procédé de préparation selon la revendication 9, dans lequel les particules de carbone sont des particules de noir de Ketjen, de noir de Shawinigan ou d'un mélange de ces derniers.

11. Procédé de préparation selon la revendication 9 ou 10, dans lequel la source solide de carbone utilisée présente une pureté supérieure à 50 %.

12. Procédé de préparation selon l'une quelconque des revendications 9 à 11, dans lequel les impuretés présentes dans la source solide de carbone sont choisies dans le groupe constitué par le soufre, l'azote et l'oxygène.

13. Procédé selon la revendication 2, dans lequel la source de carbone sous forme gazeuse est choisie dans le groupe constitué par les alcanes, les alcènes, les alcynes ou un mélange de ces derniers.

14. Procédé de préparation selon la revendication 13, dans lequel, la source gazeuse de carbone est choisie dans le groupe constitués par CH₄, C₂H₆, C₂H₂ et un mélange de ces derniers.

15. Procédé de préparation selon l'une quelconque des revendications 1 à 14, dans lequel la température dans l'étape b) d'élimination du solvant est comprise entre 40 et 150° Celsius.

16. Procédé selon la revendication 15, dans lequel la température d'élimination du solvant est comprise entre 60 et 120° Celsius.

17. Procédé de préparation selon l'une quelconque des revendications 3 à 16, dans lequel la source de carbone ainsi que le solvant sont introduits dans l'étape a).

18. Procédé de préparation selon l'une quelconque des revendications 1, dans lequel la source solide de carbone est constituée par des particules de carbone ayant une taille qui varie entre 10 et 900 nanomètres.

19. Procédé de préparation selon la revendication 18, dans lequel les particules de carbone utilisées ont une surface spécifique mesurée selon la méthode BET qui est supérieure à 50 m²/g.

20. Procédé de préparation selon l'une quelconque des revendications 1 à 19, dans lequel le mélange de particules susceptible de résulter en céramique par traitement thermique est un mélange de particules de ZrO₂ et de particules de Y₂O₃, de préférence un mélange constitué de x pour cent en poids de particules de ZrO₂ et de (100-x) pour cent en poids de particules de Y₂O_{3,} avec x variant de 1 à 99, plus préférentiellement encore avec x voisin de 50.

21. Procédé de préparation selon l'une quelconque des revendications 1 à 20, dans lequel le mélange de particules susceptible de résulter en céramique par traitement thermique est un mélange de particules de Li₂TiO₃ et de particules de TiO₂, de préférence un mélange constitué de x pour cent en poids de particules de Li₂CO₃ et de (100-x) pour cent en poids de particules de TiO₂, avec x variant de 1 à 99, plus préférentiellement encore avec x voisin de 50.

22. Procédé de préparation selon l'une quelconque des revendications 1 à 20, dans lequel le mélange de particules susceptible de résulter en céramique par traitement thermique est un mélange de particules de Li₂TiO₃ et de particules de TiO₂, de préférence un mélange constitué de x pour cent en poids de particules de Li₂CO₃ et de (100-x) pour cent en poids de particules de TiO₂, avec x variant de 1 à 99 plus préférentiellement encore avec x voisin de 50 et dans lequel la source de carbone est de préférence un polymère à base de polyoxyde d'éthylène, de préférence à base d'un polyoxyde d'éthylène d'un poids moléculaire moyen de 54.000, ledit polyoxyde d'éthylène étant préférentiellement dissout avant la mise en œuvre de l'étape d'homogénéisation dans un solvant aqueux ou organique tel que l'acétonitrile.

23. Procédé de préparation selon l'une quelconque des revendications 1 à 22, dans lequel les particules du mélange susceptible de résulter en une céramique ont une taille comprise entre 1 nanomètre et 10 micromètres, de préférence une taille comprise entre 20 et 800 nanomètres.

24. Procédé de préparation selon l'une quelconque des revendications 20 à 22, dans lequel les particules de ZrO₂, Y₂O₃, TiO₂ ou Li₂TiO₃ ont une taille qui varie entre 1 et 10 microns.

25. Procédé de préparation selon la revendication 9, dans lequel la poudre source solide de carbone, qui est de préférence une poudre de carbone, présente une répartition granulométrique **caractérisée par** une D50 comprise entre 10 nanomètres et 10 micromètres, de préférence **caractérisée par** une D50 comprise entre 100 nanomètres et 2 micromètres.

26. Procédé de préparation selon la revendication 1, dans lequel la poudre de la source de carbone est constituée par un polymère ou par un hydrocarbure sous forme de poudre dont les particules présentent une D50 de 10 nanomètres à 500 nanomètres, et de préférence une D50 de 100 à 200 nanomètres.

27. Procédé de préparation selon l'une quelconque des revendications 1 à 26, dans lequel la source susceptible de résulter en une céramique par traitement thermique présente une répartition granulométrique **caractérisée par** une D50 comprise entre 10 nanomètres et 10 micromètres, de préférence **caractérisée par** une D50 comprise entre 100 nanomètres et 2 micromètres.

28. Procédé de préparation selon l'une quelconque des revendications 1 à 27, dans lequel les particules utilisées ont des granulométries voisines, plus particulièrement **caractérisées par** des D50 inférieures ou égales à 1 micromètre.

29. Procédé de préparation selon l'une quelconque des revendications 1 à 27, dans lequel la durée de l'étape a) est comprise entre 1 et 3 heures.

30. Procédé de préparation selon la revendication 29, dans lequel la durée de l'étape a) est d'environ 2 heures.

31. Procédé de préparation selon l'une quelconque des revendications 1 à 29, dans lequel la durée de l'étape c) est de 3 à 24 heures.

32. Procédé de préparation selon la revendication 31, dans lequel la durée de l'étape c) est d'environ 3 heures.

33. Procédé de préparation selon l'une quelconque des revendications 1 à 32, dans lequel au moins une des étapes est réalisée sous atmosphère inerte, de préférence sous azote ou sous argon, ou sous un mélange de ces derniers.

34. Procédé selon l'une quelconque des revendications 1 à 37, dans lequel au moins une étape du procédé est réalisée en présence d'oxygène pur, afin d'éliminer toute trace de carbone résiduaire varie dans la poudre céramique obtenue en fin de procédé.

35. Procédé selon la revendication 13, dans lequel la source de carbone est au moins en partie sous forme liquide et/ou gazeuse.

36. Procédé selon la revendication 1, dans lequel l'étape b) d'élimination du solvant est réalisée à une température comprise entre 200 et 500 degré Celsius, de préférence à une température d'environ 400 Celsius et pendant une durée du traitement thermique comprise entre 12 et 24 heures et de préférence d'environ 20 heures.

37. Procédé selon la revendication 1, dans lequel l'étape de carbonisation est réalisée dans le réacteur ayant servi à réaliser l'homogénéisation du mélange susceptible de résulter en céramique par traitement thermique.

38. Procédé de préparation selon l'une quelconque des revendications 1 à 37, dans lequel les particules de la poudre de céramique obtenue ont une granulométrie comprise entre 10 nm et 1 micron.

39. Procédé de préparation selon la revendication 38, dans lequel la taille des particules de la poudre céramique obtenue est comprise entre 50 et 500 nm.

40. Procédé de préparation selon l'une quelconque des revendications 1 à 39, dans lequel la température, dans l'étape a) d'homogénéisation, varie de 20 à 40° Celsius.

41. Procédé de préparation selon la revendication 40, dans lequel la température dans l'étape a) est d'environ 25 °Celsius.

42. Procédé de préparation selon l'une quelconque des revendications 1 à 41, dans lequel la température dans l'étape c) de carbonisation est comprise entre 200 et 450 °Celsius.

43. Procédé de préparation selon la revendication 42, dans lequel la température dans l'étape c) est d'environ 400 °Celsius.

44. Procédé de préparation selon l'une quelconque des revendications 1 à 41, dans lequel la température dans l'étape c) de carbonisation est comprise entre 700°C et 1200°C.

45. Procédé de préparation selon l'une quelconque des revendications 1 à 44, dans lequel la quantité de la source de carbone utilisée dans ledit procédé représente de 2 à 10 % en poids, de préférence environ 6 % en poids du mélange de particules susceptible de résulter en une céramique par traitement thermique.

46. Procédé de préparation selon l'une quelconque des revendications 1 à 44, dans lequel la source de carbone est un polymère et la quantité de polymère utilisée dans ledit procédé représente de 5 à 30 % en poids, de préférence environ 20 % en poids, plus préférentiellement encore environ 10 % en poids du mélange de particules susceptible de résulter en une céramique par traitement thermique.

47. Procédé de préparation selon la revendication 20, dans lequel la quantité de Y₂O₃ dans le mélange de particules soumis à broyage varie entre 5 et 15 % et celui de la quantité de ZrO₂ varie de 5 à 15 % en poids.

48. Procédé de préparation selon l'une quelconque des revendications 1 à 47, dans lequel la poudre céramique obtenue dans l'étape b) ou dans l'étape c) est de type nano.

49. Procédé de préparation selon la revendication 48, dans lequel la taille des particules céramiques obtenues est comprise entre 10 et 900 nanomètres.

50. Procédé de préparation d'une céramique incorporant les étapes de procédé définies dans l'une quelconque des revendications 1 à 49 et une étape dans laquelle la poudre de céramique obtenue est soumise à au moins un traitement thermique à une température supérieure à 800° Celsius, pendant une durée qui est de préférence comprise entre 3 et 24 heures.

## Patentansprüche

1. Verfahren zur Herstellung eines Keramikpulvers aus einem Gemisch von Vorläufern des Pulvers und in Anwesenheit von mindestens einer Kohlenstoffquelle, umfassend mindestens die folgenden Schritte:
a) Homogenisieren unter Verwendung eines Lösungsmittels mit Hilfe einer Mechanofusionsvorrichtung der Firma HOSOKAWA, Japan, in Anwesenheit der Kohlenstoffquelle und eines Lösungsmittels, um ein inniges Gemisch der Vorläuferpartikel zu erhalten, die imstande sind, durch thermische Behandlung in einer Keramik zu resultieren,
b) Entfernen des Lösungsmittels aus dem in Schritt a) erhaltenen innigen Gemisch; und
c) Carbonisieren der restlichen Kohlenstoffquelle, die in dem innigen Vorläufergemisch vorhandenen ist, das in Schritt b) erhalten wurde, wenn die Kohlenstoffquelle nicht wesentlich aus Kohlenstoff besteht, durch thermische Behandlung des in Schritt b) erhaltenen innigen Gemischs, um ein Keramikpulver zu erhalten; und
d) Entfernen des restlichen Kohlenstoffs im Keramikpulver in Anwesenheit einer Sauerstoffquelle.

2. Herstellungsverfahren nach Anspruch 1, wobei die Kohlenstoffquelle in flüssiger, fester, gasförmiger oder in heterogener Form vorliegt.

3. Herstellungsverfahren nach Anspruch 2, wobei die Kohlenstoffquelle in flüssiger Form aus der Gruppe ausgewählt ist, die besteht aus:
- einem oder mehreren Kohlenwasserstoffen; oder
- einem oder mehreren Polymeren mit einem Molekulargewicht über 50.000.

4. Herstellungsverfahren nach Anspruch 3, wobei die flüssige Kohlenstoffquelle aus einem Gemisch flüssiger Kohlenwasserstoffe bei Raumtemperatur besteht.

5. Herstellungsverfahren nach Anspruch 4, wobei das Gemisch flüssiger Kohlenwasserstoffe in aus einem Raffinerierest besteht.

6. Herstellungsverfahren nach Anspruch 5, wobei der Raffinerierest aus einem Petrolkoks oder aus einem Pechkoks besteht.

7. Herstellungsverfahren nach Anspruch 3, wobei die Kohlenstoffquelle in flüssiger Form aus einem Gemisch aus oder auf der Basis von oxygenierten Polymeren mit einem Molekulargewicht von über 50.000 besteht.

8. Herstellungsverfahren nach Anspruch 7, wobei die Kohlenstoffquelle in flüssiger Form aus einem Propylenoxidgemisch mit einem Molekulargewicht von über 50.000 in Acetonitril besteht.

9. Verfahren nach Anspruch 2, wobei die Kohlenstoffquelle in fester Forma aus der Gruppe ausgewählt ist, die aus den natürlichen oder synthetischen Kohlenstoffpartikeln oder einem Gemisch derselben besteht.

10. Herstellungsverfahren nach Anspruch 9, wobei die Kohlenstoffpartikel Ketjenschwarz-, Shawiniganschwarzpartikel oder ein Gemisch derselben sind.

11. Herstellungsverfahren nach Anspruch 9 oder 10, wobei die verwendete feste Kohlenstoffquelle eine Reinheit von über 50 % aufweist.

12. Herstellungsverfahren nach einem der Ansprüche 9 bis 11, wobei die in der festen Kohlenstoffquelle vorhandenen Unreinheiten aus der Gruppe ausgewählt sind, die aus Schwefel, Stickstoff und Sauerstoff besteht.

13. Verfahren nach Anspruch 2, wobei die gasförmige Kohlenstoffquelle aus der Gruppe ausgewählt ist, die aus den Alkanen, den Alkenen, den Alkynen oder einem Gemisch derselben besteht.

14. Herstellungsverfahren nach Anspruch 13, wobei die gasförmige Kohlenstoffquelle aus der Gruppe ausgewählt ist, die aus CH₄, C₂H₆, C₂H₂ und einem Gemisch derselben besteht.

15. Herstellungsverfahren nach einem der Ansprüche 1 bis 14, wobei die Temperatur in Schritt b) des Entfernens des Lösungsmittels zwischen 40 und 150 °Celsius liegt.

16. Verfahren nach Anspruch 15, wobei die Temperatur des Entfernens des Lösungsmittels zwischen 60 und 120 °Celsius liegt.

17. Herstellungsverfahren nach einem der Ansprüche 3 bis 16 wobei die Kohlenstoffquelle sowie das Lösungsmittel in Schritt a) eingeleitet werden.

18. Herstellungsverfahren nach einem der Ansprüche 1, wobei die feste Kohlenstoffquelle aus Kohlenstoffpartikeln besteht, die eine Größe haben, die zwischen 10 und 900 Nanometern schwankt.

19. Herstellungsverfahren nach Anspruch 18, wobei die verwendeten Kohlenstoffpartikel eine spezifische Fläche, gemessen nach der BET-Methode, haben, die größer als 50 m²/g ist.

20. Herstellungsverfahren nach einem der Ansprüche 1 bis 19, wobei das Partikelgemisch, das imstande ist, durch thermische Behandlung eine Keramik zu ergeben, ein Gemisch aus ZrO₂-Partikeln und aus Y₂O₃-Partikeln ist, vorzugsweise ein Gemisch, das aus x Gew.-% aus ZrO₂-Partikeln und aus (100-x) Gew.-% aus Y₂O₃-Partikeln besteht, mit x, das von 1 bis 99 schwankt, noch vorzugsweiser mit x nahe 50.

21. Herstellungsverfahren nach einem der Ansprüche 1 bis 20, wobei das Partikelgemisch, das imstande ist, durch thermische Behandlung eine Keramik zu ergeben, ein Gemisch aus Li₂TiO₃-Partikeln und aus TiO₃-Partikeln ist, vorzugsweise ein Gemisch, das aus x Gew.-% aus Li₂TiO₃-Partikeln und aus (100-x) Gew.-% aus TiO₃-Partikeln besteht, mit x, das von 1 bis 99 schwankt, noch vorzugsweiser mit x nahe 50.

22. Herstellungsverfahren nach einem der Ansprüche 1 bis 20, wobei das Partikelgemisch, das imstande ist, durch thermische Behandlung eine Keramik zu ergeben, ein Gemisch aus Li₂TiO₃-Partikeln und aus TiO₂-Partikeln ist, vorzugsweise ein Gemisch, das aus x Gew.-% aus Li₂TiO₃-Partikeln und aus (100-x) Gew.-% aus TiO₂-Partikeln besteht, mit x, das von 1 bis 99 schwankt, noch vorzugsweiser mit x nahe 50 und wobei die Kohlenstoffquelle vorzugsweise ein Polymer auf der Basis von Polyethylenoxid, vorzugsweise auf der Basis eines Polyethylenoxids mit einem mittleren Molekulargewicht von 54.000, ist, wobei das Polyethylenoxid vorzugweise vor der Umsetzung des Homogenisierungsschritts in einem wässrigen oder organischen Lösungsmittel wie Acetonitril gelöst wird.

23. Herstellungsverfahren nach einem der Ansprüche 1 bis 22, wobei die Partikel des Gemischs, das imstande ist, eine Keramik zu ergeben, eine Größe haben, die zwischen 1 Nanometer und 10 Mikrometern liegt, vorzugsweise eine Größe, die zwischen 20 und 800 Nanometern liegt.

24. Herstellungsverfahren nach einem der Ansprüche 20 bis 22, wobei die ZrO₂-, Y₂O₃-, TiO₂- oder Li₂TiO₃-Partikel eine Größe haben, die zwischen 1 und 10 Mikron schwankt.

25. Herstellungsverfahren nach Anspruch 9, wobei das Pulver als feste Kohlenstoffquelle, das vorzugsweise ein Kohlenstoffpulver ist, eine granulometrische Verteilung aufweist, die durch einen D50 zwischen 10 Nanometern und 10 Mikrometern gekennzeichnet ist, vorzugsweise durch einen D50 zwischen 100 Nanometern und 2 Mikrometern gekennzeichnet ist.

26. Herstellungsverfahren nach Anspruch 1, wobei das Pulver der Kohlenstoffquelle aus einem Polymer oder aus einem pulverförmigen Kohlenwasserstoff besteht, deren Partikel einen D50 von 10 Nanometern bis 500 Nanometern und vorzugsweise einen D50 von 100 bis 200 Nanometern aufweisen.

27. Herstellungsverfahren nach einem der Ansprüche 1 bis 26, wobei die Quelle, die imstande ist, durch thermische Behandlung eine Keramik zu ergeben, eine granulometrische Verteilung aufweist, die durch einen D50 zwischen 10 Nanometern und 10 Mikrometern gekennzeichnet ist, vorzugsweise durch einen D50 zwischen 100 Nanometern und 2 Mikrometern gekennzeichnet ist.

28. Herstellungsverfahren nach einem der Ansprüche 1 bis 27, wobei die verwendeten Partikel ähnliche Granulometrien haben, die insbesondere durch D50 von unter oder gleich 1 Mikrometer gekennzeichnet sind.

29. Herstellungsverfahren nach einem der Ansprüche 1 bis 27, wobei die Dauervon Schritt a) zwischen 1 und 3 Stunden liegt.

30. Herstellungsverfahren nach Anspruch 29, wobei die Dauer von Schritt a) zirka 2 Stunden beträgt.

31. Herstellungsverfahren nach einem der Ansprüche 1 bis 29, wobei die Dauervon Schritt c) 3 bis 24 Stunden beträgt.

32. Herstellungsverfahren nach Anspruch 31, wobei die Dauer von Schritt c) zirka 3 Stunden beträgt.

33. Herstellungsverfahren nach einem der Ansprüche 1 bis 32, wobei mindestens einer der Schritte in inerter Atmosphäre, vorzugsweise in Stickstoff oder in Argon, oder in einem Gemisch derselben durchgeführt wird.

34. Verfahren nach einem der Ansprüche 1 bis 27, wobei mindestens ein Schritt des Verfahrens in Anwesenheit von reinem Sauerstoff durchgeführt wird, um jedwede Spur von restlichem Kohlenstoff im am Ende des Verfahrens erhaltenen Keramikpulver zu entfernen.

35. Verfahren nach Anspruch 13, wobei die Kohlenstoffquelle mindestens zum Teil in flüssiger und/oder gasförmiger Form vorliegt.

36. Verfahren nach Anspruch 1, wobei der Schritt b) des Entfernens des Lösungsmittels bei einer Temperatur zwischen 200 und 500 Grad Celsius, vorzugsweise bei einer Temperatur von zirka 400 Celsius und während einer Dauer der thermischen Behandlung zwischen 12 und 24 Stunden und vorzugsweise von zirka 20 Stunden durchgeführt wird.

37. Verfahren nach Anspruch 1, wobei der Carbonisierungsschritt in dem Reaktor durchgeführt wird, der zur Durchführung der Homogenisierung des Gemischs gedient hatte, das imstande ist, durch thermische Behandlung eine Keramik zu ergeben.

38. Herstellungsverfahren nach einem der Ansprüche 1 bis 37, wobei die Partikel des erhaltenen Keramikpulvers eine Granulometrie zwischen 10 nm und 1 Mikron haben.

39. Herstellungsverfahren nach Anspruch 38, wobei die Größe der Partikel des erhaltenen Keramikpulvers zwischen 50 und 500 nm liegt.

40. Herstellungsverfahren nach einem der Ansprüche 1 bis 39, wobei die Temperatur beim Homogenisierungsschritt a) von 20 bis 40 °Celsius schwankt.

41. Herstellungsverfahren nach Anspruch 40, wobei die Temperatur beim Schritt a) zirka 25 °Celsius beträgt.

42. Herstellungsverfahren nach einem der Ansprüche 1 bis 41, wobei die Temperatur beim Carbonisierungsschritt c) zwischen 200 und 450 °Celsius liegt.

43. Herstellungsverfahren nach Anspruch 42, wobei die Temperatur beim Schritt c) zirka 400 °Celsius beträgt.

44. Herstellungsverfahren nach einem der Ansprüche 1 bis 41, wobei die Temperatur beim Carbonisierungsschritt c) zwischen 700 °C und 1200 °C liegt.

45. Herstellungsverfahren nach einem der Ansprüche 1 bis 44, wobei die Menge der im Verfahren verwendeten Kohlenstoffquelle 2 bis 10 Gew.-%, vorzugsweise zirka 6 Gew.-% des Partikelgemischs darstellt, das imstande ist, durch thermische Behandlung eine Keramik zu ergeben.

46. Herstellungsverfahren nach einem der Ansprüche 1 bis 44, wobei die Kohlenstoffquelle ein Polymer ist und die in dem Verfahren verwendete Polymermenge 5 bis 30 Gew.-%, vorzugsweise zirka 20 Gew.-%, noch vorzugsweise zirka 10 Gew.-% des Partikelgemischs darstellt, das imstande ist, durch thermische Behandlung eine Keramik zu ergeben.

47. Herstellungsverfahren nach Anspruch 20, wobei die Y₂O₃-Menge im zerkleinerten Partikelgemisch zwischen 5 und 15 Gew.-% und das der ZrO₂-Menge von 5 bis 15 Gew.-% schwankt.

48. Herstellungsverfahren nach einem der Ansprüche 1 bis 47, wobei das in Schritt b) oder in Schritt c) erhaltene Keramikpulver vom Nanotyp ist.

49. Herstellungsverfahren nach Anspruch 48, wobei die Größe der erhaltenen Keramikpartikel zwischen 10 und 900 Nanometern liegt.

50. Verfahren zur Herstellung einer Keramik, das die in einem der Ansprüche 1 bis 49 definierten Verfahrensschritte und einen Schritt einschließt, bei dem das erhaltene Keramikpulver mindestens einer thermischen Behandlung bei einer Temperatur von über 800 °Celsius während einer Dauer unterzogen wird, die vorzugsweise zwischen 3 und 24 Stunden liegt.

## Claims

1. A method for preparing a ceramic powder from a mixture of precursors of said powder and in the presence of at least one carbon source, comprising at least the following steps:
a) homogenizing precursor particles - via solvent route using a mechanofusion device by HOSOKAWA Japan, in the presence of the carbon source and of a solvent to obtain an intimate mixture - able to result in a ceramic via heat treatment;
b) removing the solvent from the intimate mixture obtained at step a); and
c) carbonizing the residual carbon source present in the intimate mixture of precursors obtained at step b) when the carbon source is not essentially composed of carbon, by heat treatment of said intimate mixture obtained at step b), to obtain a ceramic powder; and
d) removing residual carbon from the ceramic powder in the presence of an oxygen source.

2. The preparation method according to claim 1, wherein the carbon source is in liquid, solid, gaseous form or in heterogeneous form.

3. The preparation method according to claim 2, wherein the carbon source in liquid form is selected from the group composed of:
- one or more hydrocarbons; or
- one or more polymers have a molecular weight higher than 50,000.

4. The preparation method according to claim 3, wherein the liquid source of carbon is composed of a mixture of hydrocarbons liquid at ambient temperature.

5. The preparation method according to claim 4, wherein the mixture of hydrocarbons liquid at ambient temperature is composed of a refinery residue.

6. The preparation method according to claim 5, wherein the refinery residue is composed of petroleum coke or pitch coke.

7. The preparation method according to claim 3, wherein the carbon source in liquid form is composed of a mixture of or containing oxygenated polymers having a molecular weight higher than 50,000.

8. The preparation method according to claim 7, wherein the carbon source in liquid form is composed of a mixture of propylene oxide having a molecular weight higher than 50,000 in acetonitrile.

9. The method according to claim 2, wherein the carbon source in solid form is selected from the group composed of synthetic or natural carbon particles, or a mixture thereof.

10. The preparation method according to claim 9, wherein the carbon particles are particles of Ketjen black, Shawinigan black or mixture thereof.

11. The preparation method according to claim 9 or 10, wherein the solid source of carbon used has purity higher than 50 %.

12. The preparation method according to any of claims 9 to 11, wherein the impurities present in the solid carbon source are selected from the group composed of sulfur, nitrogen and oxygen.

13. The method according to claim 2, wherein the carbon source in gaseous form is selected from the group composed of alkanes, alkenes, alkynes or a mixture thereof.

14. The preparation method according to claim 13, wherein the gaseous source of carbon is selected from the group composed of CH₄, C₂H₆, C₂H₂ and a mixture thereof.

15. The preparation method according to any of claims 1 to 14, wherein the temperature at the solvent removal step b) is between 40 and 150 °Celsius.

16. The method according to claim 15, wherein the solvent removal temperature is between 60 and 120 °Celsius.

17. The preparation method according to any of claims 3 to 16, wherein the carbon source and the solvent are added at step a).

18. The preparation method according to claim 1, wherein the solid source of carbon is composed of carbon particles having a size varying between 10 and 900 nanometres.

19. The preparation method according to claim 18, wherein the carbon particles used have a specific surface area, measured with the BET method, greater than 50 m²/g.

20. The preparation method according to any of claims 1 to 19, wherein the mixture of particles able to result in ceramic via heat treatment is a mixture of ZrO₂ particles and Y₂O₃ particles, preferably a mixture composed of x weight percent of ZrO₂ particles and (100-x) weight percent of Y₂O₃ particles, with x varying from 1 to 99, more preferably with x close to 50.

21. The preparation method according to any of claims 1 to 20, wherein the mixture of particles able to result in ceramic via heat treatment is a mixture of Li₂TiO₃ particles and TiO₂ particles, preferably a mixture composed of x weight percent of Li₂TiO₃ particles and (100-x) weight percent of TiO₂ particles, with x varying from 1 to 99, more preferably with x close to 50.

22. The preparation method according to any of claims 1 to 20, wherein the mixture of particles able to result in ceramic via heat treatment is a mixture of Li₂TiO₃ particles and TiO₂ particles, preferably a mixture composed of x weight percent of Li₂TiO₃ particles and (100-x) weight percent of TiO₂ particles, with x varying from 1 to 99, more preferably with x close to 50, and wherein the carbon source is preferably an ethylene polyoxide-based polymer, the ethylene polyoxide preferably having an average molecular weight of 54,000, said ethylene polyoxide preferably being dissolved before implementation of the homogenization step in an aqueous or organic solvent such as acetonitrile.

23. The preparation method according to any of claims 1 to 22, wherein the particles of the mixture able to result in a ceramic have a size of between 1 nanometre and 10 micrometres, preferably a size of between 20 and 800 nanometres.

24. The preparation method according to any of claims 20 to 22, wherein the particles of ZrO₂, Y₂O₃, TiO₂ or Li₂TiO₃ have a size varying between 1 and 10 microns.

25. The preparation method according to claim 9 wherein the powder of the solid carbon source, which is preferably a carbon powder, has a particle size distribution **characterized by** a D50 of between 10 nanometres and 10 micrometres, preferably **characterized by** a D50 of between 100 nanometres and 2 micrometres.

26. The preparation method according to claim 1, wherein the powder of the carbon source is composed of a polymer or a hydrocarbon in powder form having particles with a D50 of 10 nanometres to 500 nanometres, and preferably a D50 of 100 to 200 nanometres.

27. The preparation method according to any of claims 1 to 26, wherein the source able to result in a ceramic via heat treatment has a particle size distribution **characterized by** a D50 of between 10 nanometres and 10 micrometres, preferably **characterized by** a D50 of between 100 nanometres and 2 micrometres.

28. The preparation method according to any of claims 1 to 27, wherein the particles used have close particle sizes, more particularly **characterized by** D50 values lower than or equal to 1 micrometre.

29. The preparation method according to any of claims 1 to 27, wherein the time of step a) is between 1 and 3 hours.

30. The preparation method according to claim 29, wherein the time of step a) is about 2 hours.

31. The preparation method according to any of claims 1 to 29, wherein the time of step c) is from 3 to 24 hours.

32. The preparation method according to claim 31, wherein the time of step c) is about 3 hours.

33. The preparation method according to any of claims 1 to 32, wherein at least one of the steps is performed in an inert atmosphere, preferably under nitrogen or argon, or under a mixture thereof.

34. The method according to any of claims 1 to 27, wherein at least one step of the method is performed in the presence of pure oxygen, to remove all traces of residual carbon in the ceramic powder obtained on completion of the method.

35. The method according to claim 13, wherein the carbon source is at least partly in liquid and/or gaseous form.

36. The method according to claim 1, wherein the solvent removal step b) is conducted at a temperature of between 200 and 500 degrees Celsius, preferably at a temperature of about 400 degrees Celsius and for a heat treatment time of between 12 and 24 hours, and preferably about 20 hours.

37. The method according to claim 1, wherein the carbonization step is performed in the reactor that was used to carry out homogenization of the mixture able to result in ceramic via heat treatment.

38. The preparation method according to any of claims 1 to 37, wherein the particles of ceramic powder obtained have a particle size of between 10 nm and 1 micron.

39. The preparation method according to claim 38, wherein the particle size of the ceramic powder obtained is between 50 and 500 nm.

40. The preparation method according to any of claims 1 to 39, wherein the temperature at the homogenization step a) varies from 20 to 40 °Celsius.

41. The preparation method according to claim 40, wherein the temperature at step a) is about 25 °Celsius.

42. The preparation method according to any of claims 1 to 41, wherein the temperature at the carbonization step c) is between 200 and 450 °Celsius.

43. The preparation method according to claim 42, wherein the temperature at step c) is about 400 °Celsius.

44. The preparation method according to any of claims 1 to 41, wherein the temperature at the carbonization step c) is between 700 °C and 1200 °C.

45. The preparation method according to any of claims 1 to 44, wherein the quantity of carbon source used in said method represents from 2 to 10 weight %, preferably about 6 weight % of the mixture of particles able to result in a ceramic via heat treatment.

46. The preparation method according to any of claims 1 to 44, wherein the carbon source is a polymer and the quantity of polymer used in said method represents from 5 to 30 weight %, preferably about 20 weight %, more preferably about 10 weight % of the mixture of particles able to result in a ceramic via heat treatment.

47. The preparation method according to claim 20, wherein the quantity of Y₂O₃ in the mixture of particles subjected to grinding varies between 5 and 15 %, and the quantity of ZrO₂ varies from 5 to 15 weight %.

48. The preparation method according to any of claims 1 to 47, wherein the ceramic powder obtained at step b) or at step c) is of nano type.

49. The preparation method according to claim 48, wherein the size of the ceramic particles obtained is between 10 and 900 nanometres.

50. A method for preparing a ceramic incorporating the steps of the method defined in any of claims 1 to 49, and a step at which the ceramic powder obtained is subjected to at least one heat treatment at a temperature higher than 800 °Celsius for a time which is preferably between 3 and 24 hours.
